# FASCICULE DE BREVET EUROPEEN

(11) **EP 3 330 049 B1**
(45) Date de publication et mention de la délivrance du brevet: **18.09.2019**
(21) Numéro de dépôt: 17204833.2
(22) Date de dépôt: 01.12.2017
(51) Int. Cl.: B25J 15/06

(54) **DISPOSITIF DE PRÉHENSION D'UNE STRUCTURE MONOCOUCHE OU MULTICOUCHE COMPORTANT UN SYSTÈME D'ASPIRATION ET DES PLOTS RÉTRACTABLES**
GREIFVORRICHTUNG EINER EINSCHICHTIGEN ODER MEHRSCHICHTIGEN STRUKTUR, DIE EIN ANSAUGSYSTEM UND EINZIEHBARE KONTAKTBLÖCKE UMFASST
DEVICE FOR GRIPPING A SINGLE-LAYER OR MULTI-LAYER STRUCTURE COMPRISING A SUCTION SYSTEM AND RETRACTABLE PADS

(30) Priorité: 05.12.2016 FR 1661949
(43) Date de publication de la demande: 06.06.2018
(73) Titulaire: Commissariat à l'énergie atomique et aux énergies alternatives, 75015 Paris (FR)
(72) Inventeur: JERONIMO, Pedro, 38260 La Côte Saint-André (FR); VARACHE, Renaud, 63730 La Sauvetat (FR)
(74) Mandataire: Brevalex

(56) Documents cités:
- FR-A1- 2 275 392
- FR-E- 82 913
- US-A1- 2010 025 905

## Description

### DOMAINE TECHNIQUE

La présente invention se rapporte au domaine des dispositifs de préhension, ou encore appelés manipulateurs, de substrats comprenant une ou plusieurs couches minces, notamment de structures semi-conductrices monocouches ou multicouches, également dénommées « semiconductor wafers » en anglais, permettant notamment l'obtention de cellules photovoltaïques, et préférentiellement des cellules photovoltaïques dites « cristallines », c'est-à-dire qui sont à base de silicium monocristallin ou multicristallin, lorsque ces structures semi-conductrices correspondent à des plaquettes de silicium.

Plus précisément, la présente invention se rapporte à un dispositif selon le préambule de la revendication 1.

Un tel dispositif est connu du document US 2010/0025905 A1.

L'invention peut être mise en oeuvre pour de nombreuses applications qui impliquent la manipulation de structures monocouches ou multicouches, et particulièrement pour son utilisation sur des équipements de l'industrie photovoltaïque, par exemple pour la charge et la décharge de telles structures sur des plateaux ou plateaux de détourage, ce terme correspondant à la non déposition de matière sur les bords d'un substrat ou tout autre partie du substrat en cas de masquage.

L'invention propose ainsi un dispositif de préhension d'une structure monocouche ou multicouche comportant un système d'aspiration et des plots rétractables.

### ÉTAT DE LA TECHNIQUE ANTÉRIEURE

Dans le domaine de la fabrication des cellules photovoltaïques, et en particulier des cellules photovoltaïques cristallines à base de silicium, il est nécessaire de pouvoir manipuler les plaquettes de silicium, habituellement appelées « wafers », à partir desquelles les cellules photovoltaïques sont obtenues.

L'art antérieur enseigne ainsi de nombreuses solutions de manipulateurs de structures semi-conductrices reposant sur diverses technologies. Ainsi, par exemple, la demande de brevet canadien CA 2 688 226 A1, la demande de brevet américain US 2005/0110291 A1 et le brevet américain US 7,398,735 B1 divulguent des solutions de manipulateurs dont le principe de fonctionnement repose sur un système de type Bernoulli. D'autres publications, comme par exemple le brevet américain US 6,382,692 B1 et les demandes de brevet américain US 2007/0262598 A1, US 2010/0025905 A1, US 2010/0253106 A1 et US 2013/0032981 A1, enseignent des solutions de manipulation de structures semi-conductrices par la technologie du vide. D'autres technologies peuvent encore être employées par ces manipulateurs selon l'art antérieur, comme par exemple celles utilisant les ultra-sons ou celles reposant sur un principe de fonctionnement essentiellement mécanique.

Par ailleurs, lors de la fabrication des cellules photovoltaïques, il est très important de pouvoir se prémunir de tout risque de contamination de surface des plaquettes de silicium et également de tout risque de perturbation aéraulique. Or, il peut arriver que certains opérateurs travaillant sur des équipements photovoltaïques utilisent un même préhenseur, ou manipulateur, pour manipuler les plaquettes de silicium avant et après procédé de sorte que cela engendre un risque élevé de contamination. De plus, lors du positionnement des plaquettes de silicium sur des plateaux ou des plateaux de détourage pour recevoir un dépôt, l'opération de pose des plaquettes peut être rendue compliquée du fait des perturbations aérauliques engendrées par les préhenseurs.

Un des inconvénients majeurs des manipulateurs de l'art antérieur est ainsi qu'ils ne sont pas adaptés pour pouvoir se prémunir d'un tel risque de contamination et d'un tel risque de turbulence aéraulique lors du positionnement des structures semi-conductrices.

### EXPOSÉ DE L'INVENTION

L'invention a donc pour but de remédier au moins partiellement aux besoins mentionnés précédemment et aux inconvénients relatifs aux réalisations de l'art antérieur.

L'invention a ainsi pour objet un dispositif de préhension d'une structure (ou substrat) monocouche ou multicouche, semi-conductrice ou non, en particulier une structure semi-conductrice multicouche, notamment une plaquette de silicium, notamment une plaquette de silicium permettant l'obtention de cellules photovoltaïques à base de silicium cristallin, ledit dispositif comportant :
- un système d'aspiration par gaz comprimé, notamment de l'air comprimé, comprenant au moins un orifice d'alimentation en gaz comprimé et au moins un orifice d'échappement de gaz,
- un corps creux comprenant une cavité interne, délimitée par une surface latérale interne du corps creux et par une paroi de fond du corps creux, le système d'aspiration par gaz comprimé étant logé au moins partiellement dans ladite cavité interne, ladite paroi de fond comportant une pluralité d'orifices d'aspiration en vis-à-vis du système d'aspiration apte à permettre la préhension de la structure par aspiration,
ledit dispositif étant caractérisé par :
- une pluralité de plots (ou pions) de contact rétractables, aptes à venir au contact de la structure, les plots de contact étant positionnés au travers d'orifices de plots de la paroi de fond du corps creux, et
- des moyens rotatifs d'actionnement des plots de contact, logés au moins en partie dans la cavité interne du corps creux, aptes à permettre sélectivement à une partie des plots de contact d'être en saillie relativement à la paroi de fond du corps creux pour venir au contact de la structure tandis que les autres plots de contact sont rétractés relativement à ladite paroi de fond sans contact avec la structure.

Par « rétractables », on entend que les plots sont escamotables entre une position extrême en saillie par rapport à la paroi de fond du corps creux et une position extrême en retrait, en particulier sensiblement dans le plan de la paroi de fond du corps creux.

Le dispositif de préhension selon l'invention peut en outre comporter l'une ou plusieurs des caractéristiques suivantes prises isolément ou suivant toutes combinaisons techniques possibles.

De façon préférentielle, les moyens rotatifs d'actionnement des plots de contact peuvent comporter une bague annulaire d'actionnement des plots de contact.

La bague annulaire d'actionnement des plots de contact peut comprendre, sur une face inférieure en vis-à-vis de la paroi de fond du corps creux, des reliefs d'actionnement en saillie, prenant par exemple la forme de bossages, relativement à la face inférieure et espacés les uns des autres, aptes à permettre à une partie des plots de contact d'être en saillie relativement à la paroi de fond du corps creux pour venir au contact de la structure.

De plus, la surface latérale interne du corps creux peut comporter une première couronne intérieure et la bague annulaire d'actionnement des plots de contact peut comporter au moins un premier pignon formant roue motrice, notamment une pluralité de premiers pignons, par exemple au moins trois, notamment répartis régulièrement sur la bague annulaire, la première couronne intérieure et ledit au moins un premier pignon formant ensemble un premier système d'engrenage intérieur.

Par ailleurs, la bague annulaire d'actionnement des plots de contact peut comprendre, sur une face supérieure en vis-à-vis du système d'aspiration par gaz comprimé, une deuxième couronne intérieure et le dispositif de préhension peut comporter au moins un deuxième pignon formant roue motrice, la deuxième couronne intérieure et ledit au moins un deuxième pignon formant ensemble un deuxième système d'engrenage intérieur.

En outre, le dispositif de préhension selon l'invention peut comporter un moteur, notamment électrique, d'entraînement en rotation desdits moyens rotatifs d'actionnement des plots de contact.

Le moteur peut avantageusement être apte à entraîner en rotation la bague annulaire d'actionnement des plots de contact, le moteur comprenant ledit au moins un deuxième pignon. Le moteur peut avantageusement être asservi en position pour faire correspondre le nombre de tours en fonction des plots de contact que l'on veut actionner.

De plus, le système d'aspiration peut comporter un ou plusieurs orifices d'échappement de gaz. Le ou les orifices d'échappement de gaz peuvent être tous orientés en direction opposée de la paroi de fond du corps creux.

Autrement dit, le ou les orifices d'échappement de gaz sont préférentiellement dirigés en direction opposée de la structure monocouche ou multicouche. De cette façon, le gaz est évacué du dispositif de préhension sans générer de perturbation aéraulique autour de la structure.

Par ailleurs, le système d'aspiration peut comporter des moyens d'aspiration de type ventouse.

De plus, le système d'aspiration peut être logé au moins en partie dans un capot de préhension du dispositif de préhension. Ce capot de préhension peut comprendre une paroi de base surmontée d'un organe central de préhension, ladite paroi de base étant apte à venir fermer la cavité interne du corps creux.

Le moteur peut alors être fixé sur la paroi de base du capot de préhension.

En outre, le système d'aspiration peut comporter une pluralité d'orifices d'échappement de gaz disposés sur la paroi de base du capot de préhension, étant notamment répartis régulièrement sur ladite paroi de base.

De plus, le système d'aspiration peut en outre comporter un ou plusieurs orifices d'alimentation en gaz comprimé situés sur l'organe central de préhension du capot de préhension.

Par ailleurs, chaque plot de contact rétractable peut coopérer avec un organe de rappel élastique, notamment un ressort, les plots de contact rétractables étant notamment rétractables en rappel élastique vers le système d'aspiration.

La pluralité de plots de contact et la pluralité d'orifices de plots correspondante peuvent de plus être réparties régulièrement de façon sensiblement circulaire sur la surface de la paroi de fond du corps creux.

Les plots de contact et les orifices de plots correspondants peuvent en particulier être espacés angulairement d'un angle compris entre 30 et 50°, notamment d'environ 40°.

En outre, le dispositif de préhension selon l'invention peut comporter un capteur de détection de la structure, notamment de type capacitif, optique ou encore à ultrasons, notamment situé au niveau du corps creux, par exemple fixé sur la surface latérale externe du corps creux.

Le corps creux et/ou le capot de préhension, notamment la paroi de base et/ou l'organe de préhension, du dispositif de préhension selon l'invention peuvent être préférentiellement de forme sensiblement circulaire. Toutefois, l'invention n'est pas limitée à ce type de forme de sorte que le corps creux et/ou le capot de préhension, notamment la paroi de base et/ou l'organe de préhension, du dispositif de préhension peuvent présenter une forme différente, par exemple ovale ou polygonale, telle que rectangulaire ou carrée, entre autres.

### BRÈVE DESCRIPTION DES DESSINS

L'invention pourra être mieux comprise à la lecture de la description détaillée qui va suivre, d'un exemple de mise en oeuvre non limitatif de celle-ci, ainsi qu'à l'examen des figures, schématiques et partielles, du dessin annexé, sur lequel :
- la figure 1 représente, en perspective, un exemple de dispositif de préhension conforme à l'invention et une structure monocouche ou multicouche,
- la figure 2 représente, en perspective, la paroi de fond du corps creux du dispositif de préhension de la figure 1,
- les figures 3 et 4 représentent deux vues différentes éclatées du dispositif de préhension de la figure 1,
- les figures 5 et 6 représentent deux vues différentes en perspective des moyens rotatifs d'actionnement des plots de contact du dispositif de préhension de la figure 1,
- la figure 7 représente une vue en perspective et en semi-coupe du dispositif de préhension de la figure 1 permettant de visualiser l'actionnement des plots de contact,
- la figure 8 représente, en perspective, une vue de dessous du dispositif de préhension de la figure 1 sans la présence de la paroi de fond permettant de visualiser l'intérieur de la cavité interne du corps creux, et
- la figure 9 illustre, en perspective, l'absence de contact entre la structure et le dispositif de préhension de la figure 1 lors de son utilisation, hormis au niveau des plots de contact sélectivement actionnés par le biais des moyens rotatifs.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ D'UN MODE DE RÉALISATION PARTICULIER

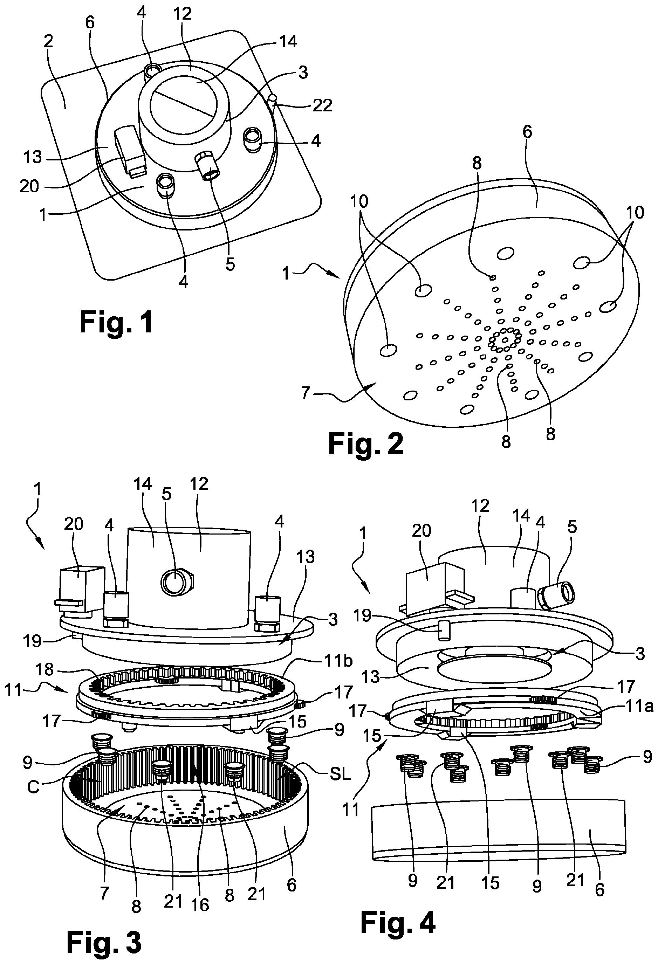

En référence aux figures 1 à 9, on va maintenant décrire un exemple de réalisation d'un dispositif de préhension 1 conforme à l'invention et son principe de fonctionnement.

Il est à noter que, comme indiqué précédemment, le dispositif de préhension 1 est préférentiellement utilisé, mais non exclusivement, pour la manipulation de structures semi-conductrices monocouches ou multicouches de type « semiconductor wafers », et en particulier pour des plaquettes de silicium, notamment les plaquettes de silicium permettant l'obtention de cellules photovoltaïques à base de silicium cristallin, telles que les cellules photovoltaïque à hétérojonction ou à homojonction.

Comme visible sur les figures 1 à 4, le dispositif de préhension 1 conforme à l'invention comporte une partie inférieure formée par corps creux 6 de forme circulaire constituant une base placée à proximité de la structure 2.

Ce corps creux 6 comporte une cavité interne C, visible sur la figure 3, laquelle est délimitée par la surface latérale interne SL du corps creux 6 et par une paroi de fond 7 du corps creux 6.

Par ailleurs, le dispositif de préhension 1 conforme à l'invention comporte une partie supérieure formée par capot de préhension 12, lequel comprend une paroi de base 13, de forme circulaire, surmontée d'un organe central de préhension 14, de forme cylindrique. De façon avantageuse, la paroi de base 13 permet de venir fermer la cavité interne C du corps creux 6.

De plus, le dispositif de préhension 1 comporte un système d'aspiration 3 par gaz comprimé, notamment par air comprimé, qui est logé au moins en partie dans la cavité interne C du corps creux 6.

Ce système d'aspiration 3 comporte par exemple des moyens d'aspiration de type ventouse, visibles sur la figure 4. De plus, il comporte un orifice d'alimentation en gaz comprimé 4 situé sur la paroi cylindrique de l'organe central de préhension 14, et trois orifices d'échappement de gaz 5 disposés sur la paroi de base 13 du capot de préhension 12, en étant répartis régulièrement sur cette paroi de base 13.

De façon avantageuse, ces orifices d'échappement de gaz 5 sont tous orientés en direction opposée de la paroi de fond 7 du corps creux 6, c'est-à-dire de sorte que les gaz sortants soient dirigés en éloignement de la structure 2. De cette façon, l'air est évacué du dispositif de préhension 1 sans générer de perturbation aéraulique autour de la structure 2.

Par ailleurs, la paroi de fond 7 du corps creux 6 comporte une pluralité d'orifices d'aspiration 8, comme visible sur la figure 2, par exemple disposés en étoile, en vis-à-vis du système d'aspiration 3 et apte à permettre la préhension de la structure 2 par aspiration.

Le dispositif de préhension 1 comporte en outre une pluralité de plots de contact rétractables 9, par exemple neuf dans cet exemple, aptes à venir au contact de la structure 2, ces plots de contact 9 étant positionnés au travers d'orifices de plots 10 de la paroi de fond 7 du corps creux 6.

Enfin, le dispositif de préhension 1 comporte des moyens rotatifs 11 d'actionnement des plots de contact 9, logés dans la cavité interne C du corps creux 6. Ces moyens rotatifs 11 sont aptes à permettre sélectivement à une partie des plots de contact 9 d'être en saillie relativement à la paroi de fond 7 du corps creux 6 pour venir au contact de la structure 2 tandis que les autres plots de contact 9 sont rétractés relativement à cette paroi de fond 7 sans contact avec la structure 2.

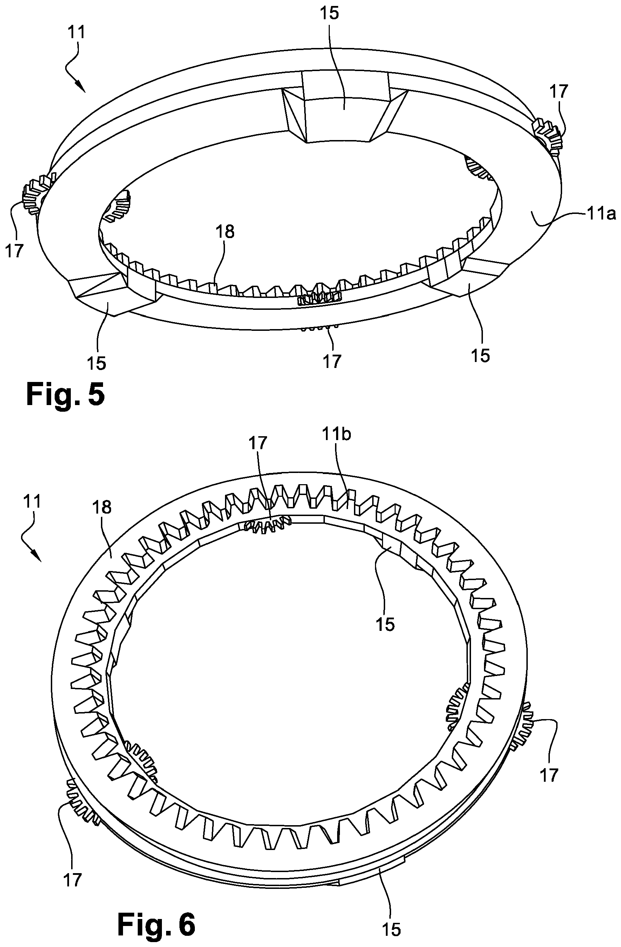

Dans cet exemple, comme visible sur les figures 5 et 6 par exemple, les moyens rotatifs 11 d'actionnement des plots de contact 9 comportent avantageusement une bague annulaire 11 d'actionnement des plots de contact 9. Cette bague annulaire 11 comprend, sur une face inférieure 11a en vis-à-vis de la paroi de fond 7 du corps creux 6, des reliefs d'actionnement 15, notamment sous forme de bossages, en saillie relativement à la face inférieure 11a et espacés les uns des autres. Ces reliefs d'actionnement 15 sont aptes à permettre à une partie des plots de contact 9 d'être en saillie relativement à la paroi de fond 7 du corps creux 6 pour venir au contact de la structure 2.

Par ailleurs, comme visible sur les figures 3 et 17, la surface latérale interne SL du corps creux 6 comporte une première couronne intérieure 16 et la bague annulaire 11 d'actionnement des plots de contact 9 comporte trois premiers pignons 17, régulièrement répartis autour de la bague annulaire 11, formant des roues motrices, la première couronne intérieure 16 et les trois premiers pignons 17 formant ensemble un premier système d'engrenage intérieur 16, 17.

De plus, la bague annulaire 11 d'actionnement des plots de contact 9 comprend également, sur une face supérieure 11b en vis-à-vis du système d'aspiration 3 par gaz comprimé, une deuxième couronne intérieure 18 et le dispositif de préhension 1 comporte un deuxième pignon 19 formant roue motrice, la deuxième couronne intérieure 18 et le deuxième pignon 19 formant ensemble un deuxième système d'engrenage intérieur 18, 19.

Plus précisément, le dispositif de préhension 1 comporte un moteur 20, par exemple électrique, fixé sur la paroi de base 13 du capot de préhension 12, qui comporte le deuxième pignon 19 et permet ainsi l'entraînement en rotation de la bague annulaire 11 au moyen du deuxième système d'engrenage 18, 19 ainsi formé.

De plus, chaque plot de contact rétractable 9 coopère avec un organe de rappel élastique 21, ici sous la forme d'un ressort, ces plots de contact rétractables 9 étant ainsi rétractables en rappel élastique vers le système d'aspiration 3.

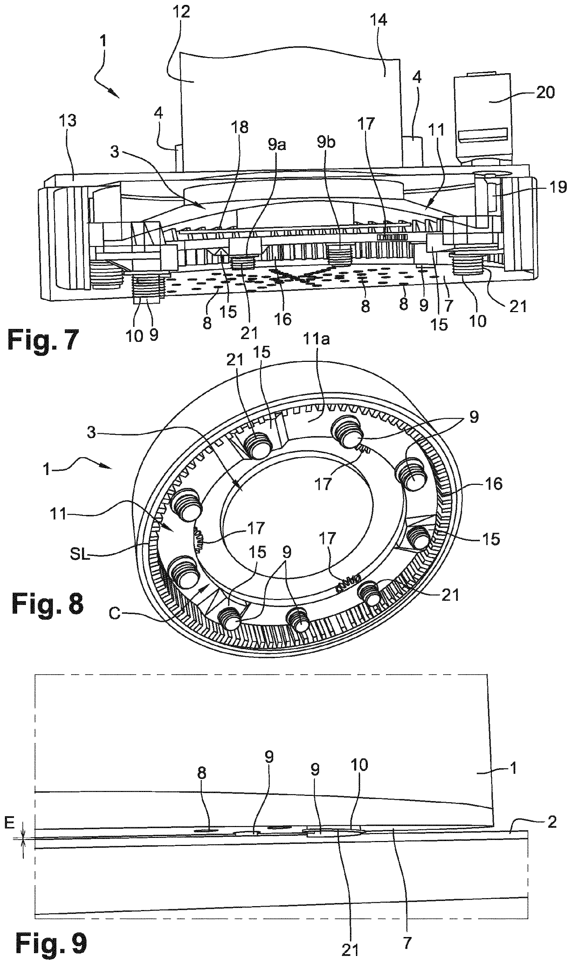

Comme visible sur les figures 2 et 8 notamment, les plots de contact 9 et les orifices de plots 10 correspondants sont répartis régulièrement de façon circulaire sur la surface de la paroi de fond 7 du corps creux 6. Plus précisément, ils sont espacés angulairement d'un angle d'environ 40°.

Enfin, le dispositif de préhension 1 comporte également un capteur de détection 22 de la structure 2, qui peut notamment être de type capacitif, optique ou encore à ultrasons, et fixé sur la surface latérale externe du corps creux 6, comme visible sur la figure 1.

Le dispositif de préhension 1 conforme l'invention peut alors être utilisé de la manière décrite ci-après.

Le nombre de plots rétractables 9 venant au contact de la structure 2 est limité de sorte à empêcher tout risque de contamination de la structure 2. Ce nombre correspond ainsi au nombre de reliefs d'actionnement 15. Dans cet exemple, il est égal à trois mais cela n'est aucunement limitatif et il pourrait y en avoir au moins quatre, voire au moins cinq, voire au moins six, voire plus. Ces pions rétractables 9 servent de support à la structure 2.

Pour un type de procédé donné, on va ainsi sélectionner une partie des plots de contact 9 qui vont venir au contact d'une structure 2 par le biais de la rotation de la bague annulaire 11 via le moteur 20. Puis, pour un autre type de procédé donné, on va sélectionner une autre partie des plots de contact 9 pour venir au contact d'une structure 2 par le biais de la rotation de la bague annulaire 11 via le moteur 20 d'un angle prédéterminé pour permettre le changement de plots rétractables 9. Autrement dit, on utilise le dispositif de préhension 1 de sorte qu'un jeu de plots rétractables 9 donné ne puisse voir qu'un type de procédé et ainsi permettre d'éviter une contamination de la structure 2.

Le changement de positionnement des plots rétractables 9 est rendu possible par le biais des reliefs d'actionnement 15 de la bague annulaire 11, comme visible sur la figure 7. En effet, lorsque le plot 9 est au contact du relief d'actionnement 15 après rotation de la bague annulaire 11, ce relief 15 le pousse en direction de la structure 2 de sorte à venir au contact de celle-ci. Au contraire, en l'absence de pression exercée par le relief d'actionnement 15 sur un plot rétractable 9, le ressort 21 du plot 9 le contraint à rentrer à l'intérieur de la cavité interne C du corps creux 6. Ainsi, à titre d'exemples sur la figure 7, le plot 9a correspond à un plot actionné tandis que le plot 9b correspond à un plot non actionné.

De façon avantageuse, comme visible sur la figure 9, lorsque le dispositif de préhension 1 est utilisé pour la préhension de la structure 2, celle-ci n'est en contact qu'uniquement avec les plots 9 actionnés de sorte qu'un espace E subsiste entre la paroi de fond 7 et la structure 2.

## Revendications

1. Dispositif de préhension (1) d'une structure (2) monocouche ou multicouche, ledit dispositif comportant :
- un système d'aspiration (3) par gaz comprimé, comprenant au moins un orifice d'alimentation en gaz comprimé (4) et au moins un orifice d'échappement de gaz (5),
- un corps creux (6) comprenant une cavité interne (C), délimitée par une surface latérale interne (SL) du corps creux (6) et par une paroi de fond (7) du corps creux (6), le système d'aspiration (3) par gaz comprimé étant logé au moins partiellement dans ladite cavité interne (C), ladite paroi de fond (7) comportant une pluralité d'orifices d'aspiration (8) en vis-à-vis du système d'aspiration (3) apte à permettre la préhension de la structure (2) par aspiration,
ledit dispositif étant **caractérisé par** :
- une pluralité de plots de contact rétractables (9), aptes à venir au contact de la structure (2), les plots de contact (9) étant positionnés au travers d'orifices de plots (10) de la paroi de fond (7) du corps creux (6), et
- des moyens rotatifs (11) d'actionnement des plots de contact (9), logés au moins en partie dans la cavité interne (C) du corps creux (6), aptes à permettre sélectivement à une partie des plots de contact (9) d'être en saillie relativement à la paroi de fond (7) du corps creux (6) pour venir au contact de la structure (2) tandis que les autres plots de contact (9) sont rétractés relativement à ladite paroi de fond (7) sans contact avec la structure (2).

2. Dispositif selon la revendication 1, **caractérisé en ce que** les moyens rotatifs (11) d'actionnement des plots de contact (9) comportent une bague annulaire (11) d'actionnement des plots de contact (9).

3. Dispositif selon la revendication 2, **caractérisé en ce que** la bague annulaire (11) d'actionnement des plots de contact (9) comprend, sur une face inférieure (11a) en vis-à-vis de la paroi de fond (7) du corps creux (6), des reliefs d'actionnement (15) en saillie relativement à la face inférieure (11a) et espacés les uns des autres, aptes à permettre à une partie des plots de contact (9) d'être en saillie relativement à la paroi de fond (7) du corps creux (6) pour venir au contact de la structure (2).

4. Dispositif selon la revendication 2 ou 3, **caractérisé en ce que** la surface latérale interne (SL) du corps creux (6) comporte une première couronne intérieure (16) et **en ce que** la bague annulaire (11) d'actionnement des plots de contact (9) comporte au moins un premier pignon (17) formant roue motrice, la première couronne intérieure (16) et ledit au moins un premier pignon (17) formant ensemble un premier système d'engrenage intérieur (16, 17).

5. Dispositif selon l'une des revendications 2 à 4, **caractérisé en ce que** la bague annulaire (11) d'actionnement des plots de contact (9) comprend, sur une face supérieure (11b) en vis-à-vis du système d'aspiration (3) par gaz comprimé, une deuxième couronne intérieure (18) et **en ce que** le dispositif de préhension (1) comporte au moins un deuxième pignon (19) formant roue motrice, la deuxième couronne intérieure (18) et ledit au moins un deuxième pignon (19) formant ensemble un deuxième système d'engrenage intérieur (18, 19).

6. Dispositif selon l'une quelconque des revendications précédentes, **caractérisé en ce qu'**il comporte un moteur (20) d'entraînement en rotation desdits moyens rotatifs (11) d'actionnement des plots de contact (9).

7. Dispositif selon les revendications 5 et 6, **caractérisé en ce que** le moteur (20) est apte à entraîner en rotation la bague annulaire (11) d'actionnement des plots de contact (9), le moteur (20) comprenant ledit au moins un deuxième pignon (19).

8. Dispositif selon l'une quelconque des revendications précédentes, **caractérisé en ce que** le système d'aspiration (3) comporte un ou plusieurs orifices d'échappement de gaz (5), tous orientés en direction opposée de la paroi de fond (7) du corps creux (6).

9. Dispositif selon l'une quelconque des revendications précédentes, **caractérisé en ce que** le système d'aspiration (3) comporte des moyens d'aspiration de type ventouse.

10. Dispositif selon l'une quelconque des revendications précédentes, **caractérisé en ce que** le système d'aspiration (3) est logé au moins en partie dans un capot de préhension (12) du dispositif de préhension (1), comprenant une paroi de base (13) surmontée d'un organe central de préhension (14), ladite paroi de base (13) étant apte à venir fermer la cavité interne (C) du corps creux (6).

11. Dispositif selon la revendication 6 ou 7 et selon la revendication 10, **caractérisé en ce que** le moteur (20) est fixé sur la paroi de base (13) du capot de préhension (12).

12. Dispositif selon l'une quelconque des revendications précédentes, **caractérisé en ce que** chaque plot de contact rétractable (9) coopère avec un organe de rappel élastique (21), les plots de contact rétractables (9) étant notamment rétractables en rappel élastique vers le système d'aspiration (3).

13. Dispositif selon l'une quelconque des revendications précédentes, **caractérisé en ce que** la pluralité de plots de contact (9) et la pluralité d'orifices de plots (10) correspondante sont réparties régulièrement de façon sensiblement circulaire sur la surface de la paroi de fond (7) du corps creux (6).

14. Dispositif selon la revendication 13, **caractérisé en ce que** les plots de contact (9) et les orifices de plots (10) correspondants sont espacés angulairement d'un angle compris entre 30 et 50°, notamment d'environ 40°.

15. Dispositif selon l'une quelconque des revendications précédentes, **caractérisé en ce qu'**il comporte un capteur de détection (22) de la structure (2), notamment de type capacitif, optique ou encore à ultrasons.

## Patentansprüche

1. Vorrichtung (1) zum Ergreifen einer ein- oder mehrschichtigen Struktur (2), wobei die Vorrichtung enthält:
- ein Druckgas-Ansaugsystem (3), das zumindest eine Druckgaszuführöffnung (4) und zumindest eine Gasabführöffnung (5) aufweist,
- einen Hohlkörper (6), der einen inneren Hohlraum (C) umfasst, der durch eine innere Seitenfläche (SL) des Hohlkörpers (6) und durch eine Bodenwand (7) des Hohlkörpers (6) begrenzt ist, wobei das Druckgas-Ansaugsystem (3) zumindest teilweise in dem inneren Hohlraum (C) aufgenommen ist, wobei die Bodenwand (7) eine Vielzahl von Ansaugöffnungen (8) gegenüber dem Ansaugsystem (3) aufweist, das dazu geeignet ist, das Ergreifen der Struktur (2) durch Ansaugen zu ermöglichen,
wobei die Vorrichtung **gekennzeichnet ist durch**:
- eine Vielzahl von einfahrbaren Kontaktstiften (9), die dazu geeignet sind, mit der Struktur (2) in Kontakt zu gelangen, wobei die Kontaktstifte (8) **durch** Stiftöffnungen (10) in der Bodenwand (7) des Hohlkörpers (6) hindurch positioniert sind, und
- Rotationsmittel (11) zum Betätigen der Kontaktstifte (9), die zumindest teilweise im inneren Hohlraum (C) des Hohlkörpers (6) aufgenommen und dazu geeignet sind, selektiv einem Teil der Kontaktstifte (9) zu ermöglichen, in Bezug auf die Bodenwand (7) des Hohlkörpers (6) vorzuspringen, um mit der Struktur (2) in Kontakt zu gelangen, während die anderen Kontaktstifte (9) in Bezug auf die Bodenwand (7) ohne Kontakt mit der Struktur (2) eingefahren sind.

2. Vorrichtung nach Anspruch 1,
**dadurch gekennzeichnet, dass**
die Rotationsmittel (11) zum Betätigen der Kontaktstifte (9) einen runden Ring (11) zum Betätigen der Kontaktstifte (9) enthalten.

3. Vorrichtung nach Anspruch 2,
**dadurch gekennzeichnet, dass**
der runde Ring (11) zum Betätigen der Kontaktstifte (9) an einer der Bodenwand (7) des Hohlkörpers (6) gegenüberliegenden Unterseite (11a) Betätigungserhebungen (15) aufweist, die bezüglich der Unterseite (11a) vorspringen und voneinander beabstandet und dazu geeignet sind, einem Teil der Kontaktstifte (9) zu ermöglichen, bezüglich der Bodenwand (7) des Hohlkörpers (6) vorzuspringen, um mit der Struktur (2) in Kontakt zu gelangen.

4. Vorrichtung nach Anspruch 2 oder 3,
**dadurch gekennzeichnet, dass**
die innere Seitenfläche (SL) des Hohlkörpers (6) einen ersten inneren Kranz (16) aufweist und dass der runde Ring (11) zum Betätigen der Kontaktstifte (9) zumindest ein erstes Ritzel (17) aufweist, das ein Antriebsrad bildet, wobei der erste innere Kranz (16) und das zumindest eine erste Ritzel (17) zusammen eine innere Getriebeanordnung (16, 17) bilden.

5. Vorrichtung nach einem der Ansprüche 2 bis 4,
**dadurch gekennzeichnet, dass**
der runde Ring (11) zum Betätigen der Kontaktstifte (9) auf einer dem Druckgas-Ansaugsystem (3) gegenüberliegenden Oberseite (11b) einen zweiten inneren Kranz (18) aufweist und dass die Greifvorrichtung (1) zumindest ein zweites Ritzel (19) enthält, das ein Antriebsrad bildet, wobei der zweite innere Kranz (18) und das zumindest eine zweite Ritzel (19) zusammen eine zweite innere Getriebeanordnung (18, 19) bilden.

6. Vorrichtung nach einem der vorangehenden Ansprüche,
**dadurch gekennzeichnet, dass**
sie einen Motor (20) zum drehenden Antreiben der Rotationsmittel (11) zum Betätigen der Kontaktstifte (9) enthält.

7. Vorrichtung nach den Ansprüchen 5 und 6,
**dadurch gekennzeichnet, dass**
der Motor (20) dazu geeignet ist, den runden Ring (11) zum Betätigen der Kontaktstifte (9) drehend anzutreiben, wobei der Motor (20) das zumindest eine zweite Ritzel (19) enthält.

8. Vorrichtung nach einem der vorangehenden Ansprüche,
**dadurch gekennzeichnet, dass**
das Ansaugsystem (3) eine oder mehrere Gasabführöffnungen (5) aufweist, die alle in der der Bodenwand (7) des Hohlkörpers (6) entgegengesetzten Richtung ausgerichtet sind.

9. Vorrichtung nach einem der vorangehenden Ansprüche,
**dadurch gekennzeichnet, dass**
das Ansaugsystem (3) Ansaugmittel in Form von Saugnäpfen aufweist.

10. Vorrichtung nach einem der vorangehenden Ansprüche,
**dadurch gekennzeichnet, dass**
das Ansaugsystem (3) zumindest teilweise in einer Greifkappe (12) der Greifvorrichtung (1) aufgenommen ist, die eine Basiswand (13) aufweist, die von einem zentralen Greiforgan (14) überhöht wird, wobei die Basiswand (13) dazu geeignet ist, den inneren Hohlraum (C) des Hohlkörpers (6) zu verschließen.

11. Vorrichtung nach Anspruch 6 oder 7 und nach Anspruch 10,
**dadurch gekennzeichnet, dass**
der Motor (20) an die Basiswand (13) der Greifkappe (12) befestigt ist.

12. Vorrichtung nach einem der vorangehenden Ansprüche,
**dadurch gekennzeichnet, dass**
jeder einfahrbare Kontaktstift (9) mit einem elastischen Rückstellorgan (21) zusammenwirkt, wobei die einfahrbaren Kontaktstifte (9) insbesondere elastisch rückstellbar zum Ansaugsystem (3) hin einfahrbar sind.

13. Vorrichtung nach einem der vorangehenden Ansprüche,
**dadurch gekennzeichnet, dass**
die Vielzahl von Kontaktstiften (9) und die entsprechende Vielzahl von Stiftöffnungen (10) im Wesentlichen kreisförmig über die Fläche der Bodenwand (7) des Hohlkörpers (6) gleichmäßig verteilt sind.

14. Vorrichtung nach Anspruch 13,
**dadurch gekennzeichnet, dass**
die Kontaktstifte (9) und die entsprechenden Stiftöffnungen (10) mit einem Winkel zwischen 30 und 50°, insbesondere etwa 40°, winkelig beabstandet sind.

15. Vorrichtung nach einem der vorangehenden Ansprüche,
**dadurch gekennzeichnet, dass**
sie einen Sensor (22) zum Erfassen der Struktur (2), insbesondere vom kapazitiven, optischen oder Ultraschall-Typ, enthält.

## Claims

1. Gripping device (1) for gripping a single-layer or multi-layer structure (2), said device comprising:
- a suction system (3) using compressed gas, comprising at least one compressed gas inlet port (4) and at least one gas venting port (5),
- a hollow body (6) comprising an internal cavity (C), delimited by an internal lateral surface (SL) of the hollow body (6) and by a bottom wall (7) of the hollow body (6), the compressed gas suction system (3) being housed at least partially inside said internal cavity (C), said bottom wall (7) including a plurality of suction ports (8) facing the suction system (3) capable of allowing the structure (2) to be gripped by suction,
said device being **characterised by**:
- a plurality of retractable contact pads (9), capable of coming into contact with the structure (2), the contact pads (9) being positioned through pad ports (10) in the bottom wall (7) of the hollow body (6), and
- rotary means (11) for actuating the contact pads (9), housed at least partially inside the internal cavity (C) of the hollow body (6), capable of selectively enabling part of the contact pads (9) to project relative to the bottom wall (7) of the hollow body (6) so as to come into contact with the structure (2), whereas the other contact pads (9) are retracted relative to said bottom wall (7) without contact with the structure (2).

2. Device according to claim 1, **characterised in that** the rotary means (11) for actuating the contact pads (9) include an annular ring (11) for actuating the contact pads (9).

3. Device according to claim 2, **characterised in that** the annular ring (11) for actuating the contact pads (9) comprises, on a bottom face (11a) facing the bottom wall (7) of the hollow body (6), actuating raised portions (15) which project relative to the bottom face (11a) and spaced apart from one another, capable of enabling part of the contact pads (9) to project relative to the bottom wall (7) of the hollow body (6) so as to come into contact with the structure (2).

4. Device according to claim 2 or 3, **characterised in that** the internal lateral surface (SL) of the hollow body (6) includes a first inner ring gear (16) and **in that** the annular ring (11) for actuating the contact pads (9) includes at least one first pinion (17) forming a drive wheel, the first inner ring gear (16) and said at least one first pinion (17) jointly forming a first inner gearing system (16, 17).

5. Device according to one of claims 2 to 4, **characterised in that** the annular ring (11) for actuating the contact pads (9) comprises, on a top face (11b) facing the compressed gas suction system (3), a second inner ring gear (18) and **in that** the gripping device (1) includes at least one second pinion (19) forming a drive wheel, the second inner ring gear (18) and said at least one second pinion (19) jointly forming a second inner gearing system (18, 19).

6. Device according to any of the preceding claims, **characterised in that** it includes a motor (20) for driving said rotary means (11) for actuating the contact pads (9) in rotation.

7. Device according to claims 5 and 6, **characterised in that** the motor (20) is capable of driving the annular ring (11) for actuating the contact pads (9) in rotation, the motor (20) comprising said at least one second pinion (19).

8. Device according to any of the preceding claims, **characterised in that** the suction system (3) includes one or more gas venting ports (5), all of which are oriented in the opposite direction to the bottom wall (7) of the hollow body (6).

9. Device according to any of the preceding claims, **characterised in that** the suction system (3) includes suction means of the suction pad type.

10. Device according to any of the preceding claims, **characterised in that** the suction system (3) is housed at least partially inside a gripping cover (12) of the gripping device (1), comprising a base wall (13) positioned underneath a central gripping member (14), said base wall (13) being capable of closing off the internal cavity (C) of the hollow body (6).

11. Device according to claim 6 or 7, and according to claim 10, **characterised in that** the motor (20) is fixed to the base wall (13) of the gripping cover (12).

12. Device according to any of the preceding claims, **characterised in that** each retractable contact pad (9) engages with an elastic return member (21), the retractable contact pads (9) in particular being retractable by elastic return towards the suction system (3).

13. Device according to any of the preceding claims, **characterised in that** the plurality of contact pads (9) and the plurality of corresponding pad ports (10) are evenly distributed in a substantially circular manner on the surface of the bottom wall (7) of the hollow body (6).

14. Device according to claim 13, **characterised in that** the contact pads (9) and the corresponding pad ports (10) are angularly spaced apart by an angle that lies in the range 30 to 50°, in particular equal to about 40°.

15. Device according to any of the preceding claims, **characterised in that** it includes a sensor (22) for detecting the structure (2), in particular of the capacitive, optical or ultrasonic sensor type.
